# EUROPÄISCHE PATENTSCHRIFT

(11) **EP 0 440 052 B1**
(45) Veröffentlichungstag und Bekanntmachung des Hinweises auf die Patenterteilung: **14.12.1994**
(21) Anmeldenummer: 91100607.0
(22) Anmeldetag: 18.01.1991
(51) Int. Cl.: B62H 5/00, B62J 7/04

(54) **Gepäckträger eines Zweirads**
Luggage carrier for bicycles
Porte-bagage pour cycles

(30) Priorität: 30.01.1990 DE 9001015 U
(43) Veröffentlichungstag der Anmeldung: 07.08.1991
(73) Patentinhaber: Aug. Winkhaus GmbH & Co. KG, 48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- EP-A- 0 337 552
- GB-A- 2 180 513

## Beschreibung

Die Erfindung betrifft einen Gepäckträger eines Zweirads um - fassend einen in üblicher Weise am Zweirad anzubringenden oder angebrachten Tragrahmen, wobei an dem Tragrahmen Halterungsmittel angebracht sind, um ein Langbügelschloß, welches einen U-förmigen Langbügel mit einem Steg und mit zwei Schenkein und einen mit den stegfernen Enden der Schenkel kuppelbaren bzw. gekuppelten Schloßkörper aufweist, in Parallelstellung zu der Tragebene des Tragrahmens vorzugsweise mit annähernder Koinzidenz der Längsachse des Langbügels mit der Längs-Mittelebene des Zweirad-Gepäckträgers an dem Tragrahmen zu haltern, wie er im Oberbegriff des Anspruchs 1 angegeben ist.

Ein derartiger Gepäckträger ist z. B. aus der GB-2 180 513-A bekannt. Bei diesem Gepäckträger ist ein Langbügelschloß im wesentlichen in Parallelstellung zur Trageebene des Gepäckträgers getragen. Das Langbügelschloß ist mit seinem Langbügel von einer Hinterseite des Gepäckträgers her in eine durch zwei im wesentlichen U-förmige Bügel gebildete Schiebeführung einschiebbar. In seiner in die Schiebeführung eingeschobenen Transportstellung ist das Langbügelschloß am Gepäckträger dadurch gehalten, daß die durch die Schiebeführung gebildete Einschubquerschnittsfläche derart bemessen ist, daß der Langbügel durch die zwischen diesem und der Schiebeführung entwickelte Reibungskraft gehalten ist. Bei diesem Gepäckträger besteht jedoch das Problem, daß keine Sicherungsmittel vorhanden sind, die das Langbügelschloß am Gepäckträger sichern, um auch z. B. beim Befahren einer unebenen Straße ein allmähliches Herausgleiten des Langbügelschlosses aus der Schiebeführung zu verhindern.

Ein weiterer Gepäckträger ist aus der U. S. Patentschrift 4,271,690 bekannt. Nach einer ersten Ausführungsform der bekannten Anordnung ist der Langbügel mit seinem Quersteg am rückwärtigen unteren Ende eines Hinterrad-Schutzbleches angelenkt und kann hier zwischen einer Transportstellung und verschiedenen Sicherungsstellungen verschwenkt werden. In der Transportstellung ruht der Schloßkörper auf einer Auflage, welche am rückwärtigen Ende des Gepäckträgers angebracht ist. In einer ersten Absperrstellung ist der Langbügel nach rückwärts abgeschwenkt und umgreift einen stationären Pfosten in der Landschaft. In einer anderen möglichen Sicherungsstellung verlaufen die Schenkel des Langbügels sekantiell zur Radebene, und der Schloßkörper durchgreift den Zwischenraum zwischen zwei aufeinanderfolgenden Speichen des Hinterrads.

Nach einer zweiten Ausführungsform ist der Steg des Langbügels an der Unterseite eines Gepäckträgers angelenkt und kann zwischen einer Transportstellung und zwei verschiedenen Absperrstellungen verschwenkt werden. In der Transportstellung liegt der Schloßkörper auf einer Auflage auf, welche an der Unterseite des Gepäckträgers im Sattelbereich angebracht ist. In dieser Transportstellung liegt das Langbügelschloß mit der Langbügelebene annähernd parallel zur Tragebene des Tragrahmens des Gepäckträgers.

In einer ersten möglichen Absperrstellung ist der Langbügel gegenüber der Transportstellung um 180° nach hinten geschwenkt, so daß er einen stationären Pfosten in der Landschaft umgreifen kann. In einer weiteren Absperrstellung verlaufen die Schenkel des Langbügels sekantiell zu der Radebene und der Schloßkörper greift zwischen zwei aufeinanderfolgenden Speichen des Hinterrads hindurch.

Bei den bekannten Ausführungsformen ist das Langbügelschloß untrennbar mit dem Schutzblech bzw. dem Gepäckträger verbunden. Ein Austausch des Langbügelschlosses bedarf erheblicher Demontage-und Remontagearbeit.

Zu beanstanden ist ferner bei der erstdiskutierten bekannten Ausführungsform, daß das Langbügelschloß durch das relativ labile Schutzblech getragen ist, was sowohl in der Sicherungsstellung als auch in der Transportstellung nachteilig ist. Bei der zweitdiskutierten Ausführungsform ist überdies zu beanstanden, daß der Schloßkörper zum Zwecke des Sperrens und Entsperrens im Bereich des Sattelrohrs relativ schwer zugänglich ist.

Demgegenüber ist es die Aufgabe der vorliegenden Erfindung, einen gattungsgemäßen Gepäckträger derart weiterzubilden, daß das Langbügelschloß in unauffälliger und stabiler Weise am Gepäckträger derart verstaut werden kann, daß es gegen unbeabsichtigtes Verschieben und gegen Verlust gesichert ist. Erfindungsgemäß wird die Aufgabe durch das im kennzeichnenden Teil des Anspruchs 1 angegebene Merkmal gelöst.

Im Hinblick auf eine möglichst unauffällige und raumsparende Unterbringung des Langbügelschlosses ist weiter vorgesehen, daß der Langbügel in der Halterungsstellung in kurzem Abstand unterhalb der Tragebene des Tragrahmens liegt.

Bei dem Gepäckträger handelt es sich insbesondere um einen normalen Fahrrad-Gepäckträger, wie er an einem Fahrrad hinter dem Sattel und über dem Hinterrad in symmetrischer Lage zur Längs-Mittelebene des Zweirad-Rahmens angebracht wird.

Die Sicherungsmittel sind bevorzugt mit einem Einschubbegrenzungsanschlag ausgeführt, welcher der Begrenzung der Einschiebbewegung des Langbügels dient.

Der Auszugsbegrenzungsanschlag ist vorzugsweise gegen Federkraft aus seiner Auszugbegrenzungsstellung auslenkbar.

Im Hinblick auf möglichst raumsparende Unterbringung ist es erwünscht, daß der Langbügel unmittelbar an der Unterseite des Tragrahmens angeordnet ist.

Ist ein Schutzblech unterhalb des Tragrahmens vorhanden, so ist es möglich, daß der Langbügel zwischen der Unterseite des Tragrahmens und einem unterhalb des Tragrahmens angeordneten Schutzblech angeordnet ist.

Um das Langbügelschloß, gleichgültig welche Breite es hat, am Gepackträger so unterzubringen, daß es weder technisch noch optisch stört, empfiehlt es sich, daß die Längsmittelachse des Langbügelschlosses annähernd mit der vertikalen Längsmittelebene des Tragrahmens zusammenfällt.

Um einen sicheren Halt des Langbügelschlosses zu gewährleisten, wird vorgeschlagen, daß die Schiebeführung zwei in Längsrichtung des Tragrahmens beabstandete Schiebeführungselemente aufweist.

Der Auszugbegrenzungsanschlag kann mit einer Anschlagfläche des Schloßkörpers zusammenwirken, die sich aufgrund der natürlichen Form des Schloßkörpers anbietet. Für die Handhabung ist es dabei besonders günstig, wenn der Auszugbegrenzungsanschlag durch einen Teil des Langbügelschlosses bei dessen Einführung in die Schiebeführung zusammentritt und dadurch zwangsläufig auslenkbar ist, etwa in der Weise, daß das Langbügelschloß mit dem Auszugbegrenzungsanschlag über eine Auslenkschräge zusammenwirkt. Für die Handhabung ist es dabei weiter günstig, wenn an dem Auszugbegrenzungsanschlag ein Löseelement zum Ausrücken des Auszugbegrenzungsanschlags aus seiner Wirkstellung vorgesehen ist.

Eine raumsparende und doch leicht zugängliche Unterbringung des Langbügelschlosses ergibt sich, wenn der Schloßkörper in der eingeschobenen Stellung mit seiner dem Langbügelsteg zugekehrten Endfläche dem rückwärtigen Querschenkel des Tragrahmens benachbart ist.

Eine einfache Gestaltung der Führung ergibt sich dann, wenn mindestens ein Führungselement der Schiebeführung den beiden Schenkeln des Langbügels an deren voneinander abgelegenen Flächenbereichen anliegt. Dabei kommt man zu einer besonders kompakten Ausführungsform, wenn die Schiebeführung ein die beiden Schenkel des Langbügels gemeinsam umgreifendes Durchsteckkanalelement aufweist. Dieses Durchsteckkanalelement kann an der Unterseite des rückwärtigen Querschenkels des Tragrahmens angebracht sein.

Der Einschubbegrenzungsanschlag kann von einer Endfläche des Durchsteckkanalelements gebildet sein und mit einer gegenüber liegenden Endfläche des Schloßkörpers zusammenwirken.

Der Aufbau der Schiebeführung insgesamt läßt sich in besonders einfacher Weise mit wenigen Teilen erstellen, wenn der Auszugbegrenzungsanschlag einstückig mit dem Durchsteckkanalelement hergestellt ist, etwa in der Weise, daß der Auszugbegrenzungsanschlag mit dem Durchsteckkanalelement über ein Blattfederelement verbunden ist. Eine einfache und optisch ansprechende Gestaltung ergibt sich, wenn der Auszugbegrenzungsanschlag und eine dessen Auslenkung bewirkende Auslenkschräge eine Sägezahnkontur bilden.

Die Befestigung des Durchsteckkanalelements läßt sich ohne störenden Eingriff in die Gepäckauflagefläche dadurch gewinnen, daß das Durchsteckkanalelement mit einem Befestigungsflansch ausgeführt ist, welcher an der Vorderseite eines rückwärtigen Querschenkels des Tragrahmens befestigt ist.

Ein weiterer Teil der Schiebeführung kann von einer Querstrebe des Tragrahmens gebildet sein.

Um eine stabile flatter- und geräuschbildungsfreie Lage des Langbügelschlosses sicherzustellen, wird vorgeschlagen, daß Schiebeführungselemente der Schiebeführung derart außer Flucht sind, daß ein Einschieben des Langbügels nur unter elastischer Deformation mindestens eines der Schiebeführungselemente möglich ist.

Mindestens ein Schiebeführungselement kann an der Unterseite von Längsstäben des Tragrahmens befestigt sein. Alternativ ist es auch möglich, daß mindestens ein Schiebeführungselement der Schiebeführung an Stützstreben befestigt ist, welche von dem Tragrahmen zu einer Abstützung im Bereich der Hinterradachse verlaufen.

Ein Schiebeführungselement der Schiebeführung kann wenigstens zum Teil aus Drahtmaterial gebildet sein in Form einer Drahtschlinge.

Um einen ratterfreien Eingriff des Langbügels in eine solche Drahtschleife zu gewährleisten, kann das Drahtmaterial mindestens im Bereich der Anlage der Schenkel des U-Bügels mit Elastomermaterial beschichtet sein, etwa von einem Elastomerschlauch umgeben sein. Es ist aber auch möglich, daß in ein ringförmig geschlossenes Schiebeführungselement ein Kontaktrahmen aus Elastomermaterial eingesetzt, insbesondere eingeschnappt, ist.

Die Erfindung betrifft weiter eine Anordnung eines Langbügelschlosses an einem Zweirad, insbesondere an dem Gepäckträger eines Zweirads, wobei an dem Zweirad, insbesondere dem Gepäckträger, eine Schiebeführung mit einem Eingang vorgesehen ist, durch welchen der Langbügel des Langbügelschlosses mit seinem Steg voraus einführbar ist und wobei Sicherungsmittel vorgesehen sind, um das Langbügelschloß in der Schiebeführung gegen unbeabsichtigte Verschiebung zu sichern. Eine solche Anordnung ist beispielsweise aus der europäischen Offenlegungsschrift 79 798 bekannt. Der Erfindung liegt, ausgehend von einer solchen Anordnung, die Aufgabe zugrunde, eine Sperrmöglichkeit zu schaffen, welche ein unbefugtes Entnehmen des Langbügelschlosses aus der Schiebeführung verhindert. Zur Lösung dieser Aufgabe wird vorgeschlagen, daß im Eingangsbereich der Schiebeführung eine den vom Langbügel und vom Schloßkörper begrenzten Durchgang fortsetzende Fangvorrichtung vorgesehen ist, welche den Rückzug des Langbügels aus der Schiebeführung bis in eine Drehstellung gestattet, in welcher der Langbügel aus der Fluchtlage zur Schiebeführung so weit herausdrehbar ist, daß die Schenkel des Langbügels nach Abnehmen des Schloßkörpers von der Fangvorrichtung abgezogen werden können.

Eine bevorzugte Ausführungsform dieser Anordnung besteht darin, daß die Fangvorrichtung von einer vor dem Eingang der Schiebeführung angebrachten Fangschleife gebildet ist, welche ein Aushaken des mit dem Schloßkörper vereinigten Langbügels verhindert und zu der Schiebeführung hin derart offen ist, daß der Langbügel mit seinem Steg voraus von der Fangschleife aus in die Schiebeführung eingeschoben werden kann.

Um einen möglichst einfachen und materialsparenden Aufbau zu gewinnen, wird weiter vorgeschlagen, daß die Fangvorrichtung von Konstruktionsteilen des Tragrahmens und/oder von Trägerstäben des Tragrahmens gebildet ist.

Es besteht auch die Möglichkeit, daß ein Teil der Fangvorrichtung einen Einschubbegrenzungsanschlag bildet, welcher das Einschieben des Langbügels in die Schiebeführung begrenzt.

Weiter besteht auch die Möglichkeit, daß ein auslenkbarer Teil der Fangvorrichtung einen Auszugsbegrenzungsanschlag bildet, welcher den Auszug des Langbügels aus der Schiebeführung in seiner Ruhestellung verhindert und nach Auslenken aus der Ruhestellung gestattet.

Die Fangvorrichtung kann mit Vorteil auch als Träger für eine Rückleuchte des Zweirads verwendet werden.

Schließlich betrifft die Erfindung weiter eine Anordnung eines Langbügelschlosses an einem Zweirad, insbesondere an dem Gepäckträger eines Zweirads, wobei an dem Zweirad, insbesondere dem Gepäckträger, eine Schiebeführung mit einem Eingang vorgesehen ist, durch welchen der Langbügel des Langbügelschlosses mit seinem Steg voraus einführbar ist und wobei Sicherungsmittel vorgesehen sind, um das Langbügelschloß in der Schiebeführung gegen unbeabsichtigte Verschiebung zu sichern, wobei vorgeschlagen wird, daß der Langbügel des Langbügelschlosses in eine dessen beide Schenkel aufnehmende Schiebeführung einsteckbar ist und daß ein relativ zur Einsteckrichtung elastisch ausrückbarer Auszugsbegrenzungsanschlag vorgesehen ist.

Die beiliegenden Figuren erläutern die Erfindung anhand von Ausführungsbeispielen. Es stellen dar:
Fig. 1 eine Seitenansicht einer erfindungsgemäßen, an einem Gepäckträger eines Zweirads angebrachten Halterungseinrichtung mit eingestecktem Langbügelschloß;
Fig. 2 eine Draufsicht auf die Halterungseinrichtung gemäß Fig. 1;
Fig. 3 eine Draufsicht aus eine vergrößerte Einzeldarstellung der Halterungseinrichtung gemäß Fig. 1 und 2;
Fig. 4 einen Schnitt entlang der Linie IV-IV in Fig. 3;
Fig. 5 eine Ansicht der Halterungseinrichtung in Richtung des Pfeiles X in Fig. 3;
Fig. 6 eine Seitenansicht eines Fahrradrahmens mit Gepäckträger und daran mittels einer Halterungseinrichtung gemäß den Fig. 1 bis 5 angebrachte Halterungseinrichtung;
Fig. 7 und 8, Fig. 9 und 10, Fig. 11 und 12, Fig. 13 und 14, Fig. 15 und 16, Fig. 17 und 18, Fig. 19 und 20, Fig. 21 und 22 jeweils eine Seitenansicht teilweise geschnitten und eine Draufsicht auf weitere Ausführungsformen eines Gepäckträgers mit Transporthalterung für ein Langbügelschloß;
Fig. 23 einen Schnitt nach Linie XXIII-XXIII der Fig. 22;
Fig. 24 das Anbringungs- bzw. Entnahmeschema eines Langbügelschlosses an einem Gepäckträger nach Fig. 17 und 18 und
Fig. 25 das Schema einer Sicherung eines Langbügelschlosses an einer Schiebeführung.

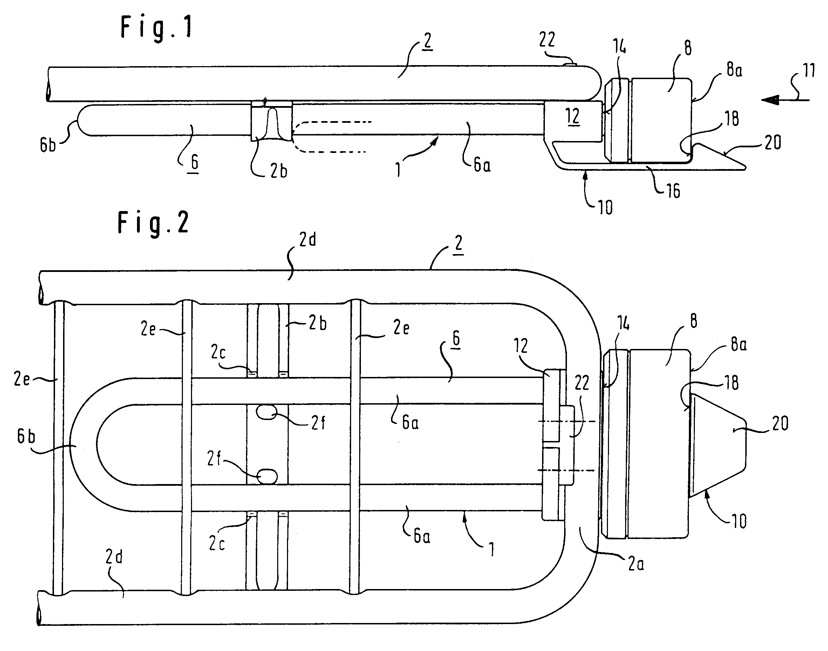

In der Zeichnung ist eine erfindungsgemäße, vorzugsweise aus Kunststoff, insbesondere aus Polyamid, hergestellte Halterungseinrichtung allgemein mit 10 bezeichnet. In den Fig. 1 und 2 ist diese Halterungseinrichtung 10 an einer rückwärtigen Querstrebe 2a eines Fahrrad-Gepäckträgers 2 angebracht. In die Halterungseinrichtung 10 ist in Richtung des pfeiles 11 in Fig. 1 (im weiteren als Einsteckrichtung 11 bezeichnet) ein aus einem Langbügel 6 und einem Schloßkörper 8 bestehendes Langbügelschloß 1 eingeschoben.

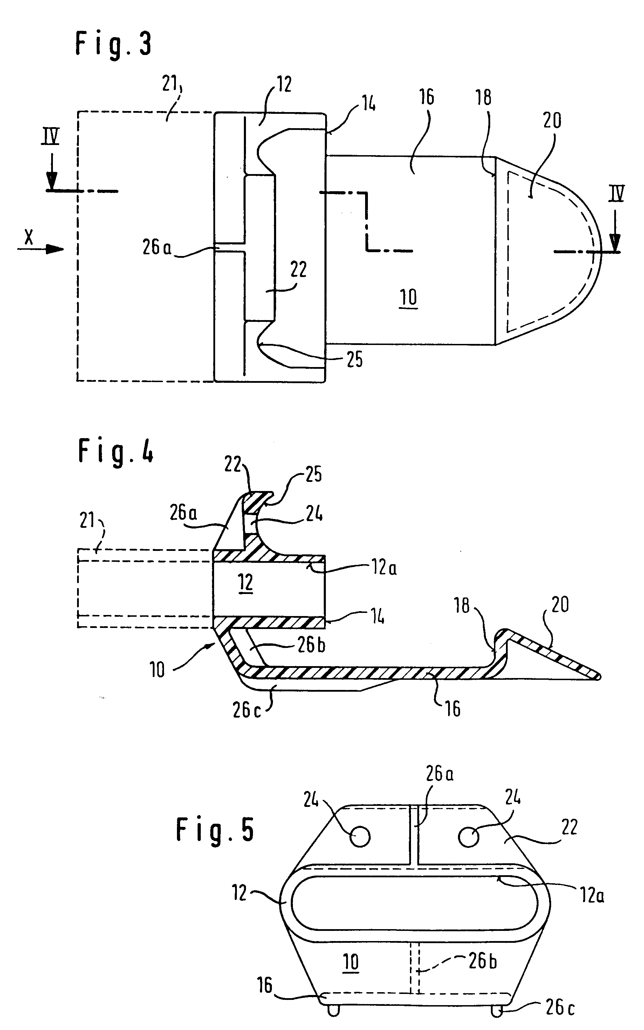

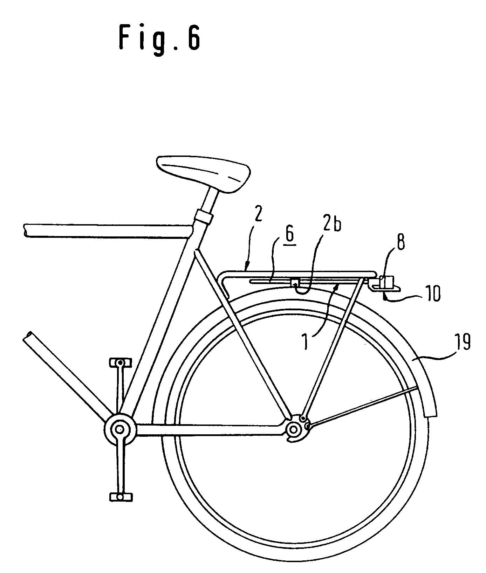

Wie aus den Fig. 3 - 5 hervorgeht, weist die Halterungseinrichtung 10 ein die beiden Schenkel 6a des Langbügels 6 umgreifendes Durcksteckkanalelement 12 auf. Das Durchsteckkanalelement 12 besitzt hierzu einen Durchgang 12a für den Langbügel 6, der bezogen auf die Einsteckrichtung 11 einen ovalen Querschnitt besitzt (vgl. Fig. 5). Der entgegen der Einsteckrichtung 11 weisende Rand des Durchsteckkanalelements 12 bildet einen Einsteckbegrenzungsanschlag 14 für das Schloß 6,8. Gegen diesen Anschlag 14 schlägt der Schloßkörper 8 mit seiner zu dem Langbügel 6 weisenden Fläche beim Einschieben des Langbügelschlosses 6,8 an (vgl. Fig. 1 und 2).

An das Durchsteckkanalelement 12 ist einstückig ein zur Einsteckrichtung 11 paralleles, über dessen in Einsteckrichtung 11 rückwärtiges Ende hinaus ausladendes Blattfederelement 16 angeformt. An dieses Blattfederelement 16 schließt sich entgegen der Einsteckrichtung 11 der Auszugbegrenzungsanschlag 18 an. Bei eingestecktem Langbügelschloß 6,8 liegt also der Schloßkörper 8 in Einsteckrichtung 11 an dem Einsteckbegrenzungsanschlag 14 und entgegen der Einsteckrichtung 11 an dem Auszugbegrenzungsanschlag 18 an. An den Auszugbegrenzungsanschlag 18 schließt sich entgegen der Einsteckrichtung 11 eine Auslenkfläche 20 an. Der Auszugbegrenzungsanschlag 18 und die Auslenkfläche 20 besitzen dabei eine Sägezahnkontur (vgl. Fig. 4).

Wie aus den Fig. 1 und 2 hervorgeht, wird bei eingeschobenem Langbügelschloß 1 nur ein relativ kurzer Abschnitt des Langbügels 6 von dem Durchsteckkanalelement 12 aufgenommen. Durch eine weitere Querstrebe 2b des Gepäckträgers 2 wird der Langbügel 6 deshalb zusätzlich abgestützt (vgl. Fig. 1 und 2). Diese Querstrebe 2b dient zur Verbindung des Gepäckträgers 2 mit einem nicht gezeigten Schutzblech des Fahrrads. Ebenso besteht die Möglichkeit, daß sich, bezogen auf die Einsteckrichtung 11, an dem vorderen Ende des Durchsteckhanalelements 12 ein einstückig angeformtes Verlängerungselement 21 anschließt, wie dies in den Fig. 3 durch die unterbrochenen Linien dargestellt ist.

Ebenfalls einstückig schließt sich an das Durchsteckkanalelement 12 ein Befestigungsflansch 22 an, der zwei horizontal verlaufende, nebeneinander in einer Ebene angeordnete Durchgangsbohrungen 24 besitzt. Der Befestigungsflansch 22 weist eine entgegen der Einsteckrichtung 11 ausgebildete konkave Vertiefung 25 auf, mit der er an der rückwärtigen Querstrebe 2a des Gepäckträgers 2 anliegt (vgl. Fig. 1 und 2). Zur Festlegung der Halterungseinrichtung 10 werden dann durch die beiden Durchgangsbohrungen 24 zwei nicht weiter gezeigte Schraubmittel hindurchgesteckt und in ebenfalls nicht gezeigten Gewindebohrungen der Querstrebe 2a verschraubt.

Die Halterungseinrichtung 10 besitzt des weiteren an dem Befestigungsflansch 22, an dem Übergang von dem Durchsteckkanalelement 12 zu dem Blattfederelement 16 und an dem Blattfederelement 16 Versteifungsrippen 26a - c (vgl. Fig. 3 - 5).

Zum Einschieben des Langbügelschlosses 1 wird dieses an dem Schloßkörper 8 ergriffen und mit dem Langbügel 6 voraus in Einsteckrichtung 11 in das Durchsteckkanalelement 12 eingeschoben. Dabei wird die Auslenkfläche 20 beim Einschieben des Langbügelschlosses 1 durch den Schloßkörper 8 aus ihrer Ausgangsstellung gemäß Fig. 1 nach unten verschwenkt. Sobald der Schloßkörper 8 an der Auslenkfläche 20 vorbeigeschoben worden ist, schwenkt die Auslenkfläche 20 auf grund der Elastizität des Blattfederelements 16 in ihre Ausgangsstellung zurück, so daß der Auszugbegrenzungsanschlag 18 an der Bodenfläche 8a des Schloßkörpers 8 Beim Einschieben des Langbügelschlosses 1 in den Durchsteckkanal 12a stößt der Querschenkel 6b des Langbügelschlosses gegen die Querstrebe 2b, so wie in Figur 1 mit gestrichelten Linien angedeutet. Dann bedarf es einer elastischen Verbiegung des Durchsteckkanalelements 12, damit der Querschenkel 6b des Langbügels 6 auf der Querstrebe zum Aufliegen kommt und weiter verschoben werden kann in Richtung auf die Stellung gemäß Figur 1. Dies bedeutet, daß dann, wenn das Langbügelschloß 1 seine Position gemäß Figur 1 erreicht hat, die Langbügelschenkel 6a unter Vorspannung an der Querstrebe 2b anliegen. Damit ist das Langbügelschloß 1 gegen ein Pendeln in vertikaler Ebene gesichert. Zusätzlich sind die Langbügelschenkel 6a durch Anschläge 2c an de Querschenkeln 2b gegen ein Verschwenken in horizontaler Ebene gesichert.

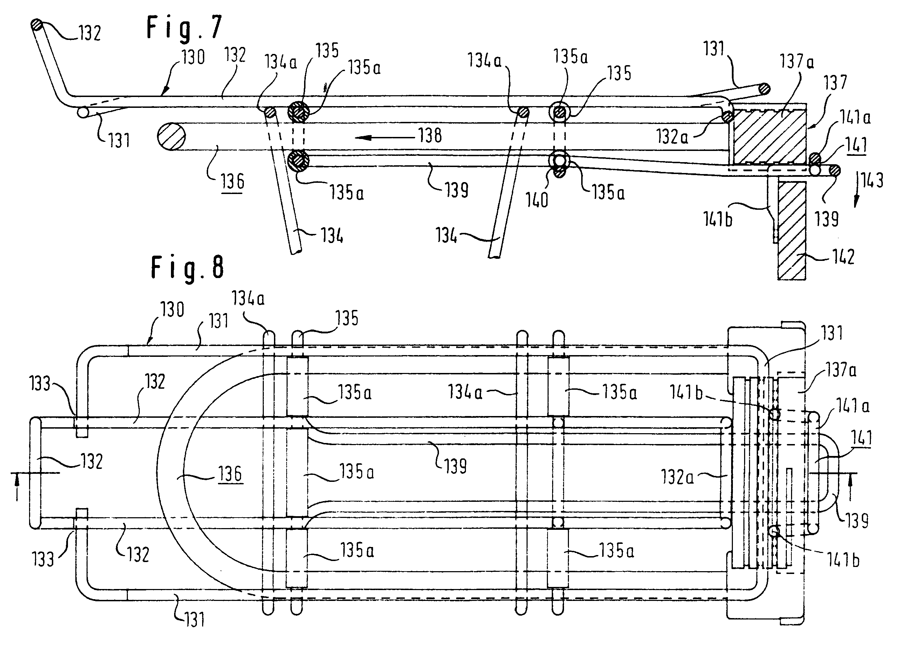

In Figur 6 erkennt man den rückwärtigen Teil eines Fahrradrahmens mit dem Gepäckträger 2, an dessen Unterseite das Langbügelschloß 1, wie in Figur 2 dargestellt, angebracht ist. Der Gepäckträger 2 weist neben der Querstrebe 2a Längsstreben 2d auf (Figur 2). Diese Längsstreben 2d sind von Auflagestreben 2e überbrückt, auf welchen das Gepäck zur Auflage zu bringen ist. Der Gepäckträger kann in üblicher Weise mit Sicherungsmitteln ausgerüstet sein, um das auf den Längsstreben 2d und den Auflagestreben 2e aufliegende Gepäck zu sichern. Beispielsweise können diese Sicherungsmittel von Gummibändern oder einem unter Federkraft stehenden Schwenkbügel gebildet sein. An dem Querschenkel 2b sind Befestigungsöffnungen 2f angebracht, die der Ankoppelung eines Schutzblechs, etwa mittels Schraubbolzen und zugehöriger Muttern dienen.

Der Schloßkörper 8 ist auf die Enden der beiden Schenkel 6a aufsteckbar und mit diesen kuppelbar, z.B. kann der Schloßkörper 8 auf die beiden Schenkelenden aufgerastet und durch einen Schlüssel gelöst werden. Zu bemerken ist jedoch, daß es für die Anbringung des Langbügelschloßes 1 an dem Gepäckräger und für die Abnahme des Langbügelschlosses 1 von dem Gepäckträger nicht notwendig ist, eine Trennung zwischen dem Langbügel 6 und dem Schloßkörper 8 vorzunehmen, da das Blattfederelement 16 mit dem Anschlag 18 elastisch auslenkbar ist.

In der Figur 6 erkennt man auch das Schutzblech 19, welches mit der Querstrebe 2b verschraubt ist.

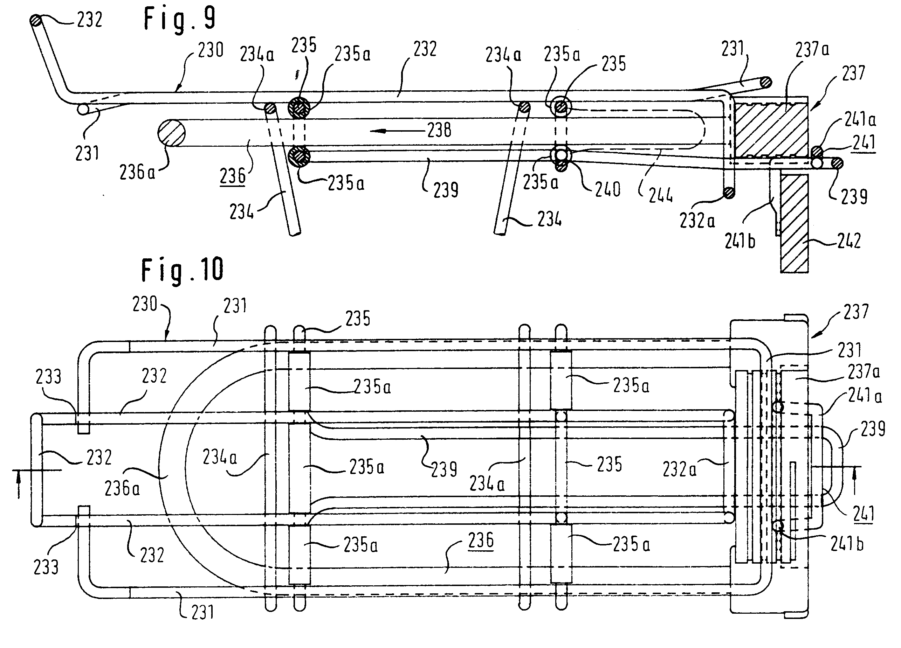

In den Fig. 7 und 8 erkennt man einen Tragrahmen 130 eines Gepäckträgers. Dieser Tragrahmen ist gebildet von einem äußeren Rahmendraht 131 und einem inneren Rahmendraht 132, die bei 133 miteinander verschweißt sind. Die beiden Rahmendrähte 131, 132 sind auf den Querschenkeln 134a des Tragstreben 134 angebracht. An der Unterseite der Rahmendrähte 131 und 132 sind Schiebeführungselemente 135 angebracht, welche als ringförmig geschlossene, längliche Drahtschlingen ausgebildet sind und dazu bestimmt sind, den Langbügel 136 eines Langbügelschlosses 137 aufzunehmen, und zwar durch Einstecken in Pfeilrichtung 138. Auf den Schiebeführungselementen 135 sind Elastomerschläuche 135a angebracht, welche der ratterfreien Aufnahme des Langbügels 136 dienen. Der vordere Querschenkel 132a des inneren Rahmendrahts 132 ist nach unten gekröpft und bildet einen Einschubbegrenzungsanschlag für den Schloßkörper 137a des Langbügelschlosses 137. An dem linken Schiebeführungselement 135 sind die Enden eines U-Drahts 139 angelötet. Dieser U-Draht ist bei 140 auf dem rechten Schiebeführungselement 135 lose aufgelagert und bildet an seinem rechten Ende ein Auflager für den Schloßkörper 137a. An dem rechten Ende des U-Drahts 139 ist ein Drahtstück 141 angeschweißt, dessen oberer Teil 141a einen Auszugsbegrenzungsanschlag für den Schloßkörper 137a bildet und dessen Enden 141b Träger einer Rückleuchte 142 bilden. Durch Auslenken des U-Drahts 139 nach unten in Pfeilrichtung 143 kann der Schloßkörper 137a zum Auszug freigegeben werden. In der in Fig. 7 und 8 gezeichneten Stellung ist das Langbügelschloß 137 durch die Schiebeführungselemente 135, den Einschubbegrenzungsanschlag 132a und den Auszugbegrenzungsanschlag 141a unverrückbar gehalten.

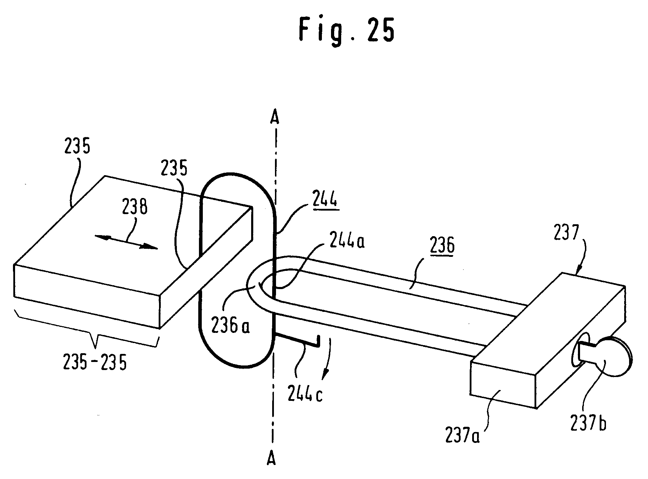

In Fig. 9 und 10 ist eine ähnliche Ausführungsform dargestellt wie in Fig. 7 und 8. Analoge Teile sind mit gleichen Bezugszeichen versehen wie in Fig. 7 und 8, jeweils vermehrt um die Zahl 100. Die Ausführungsform nach den Fig. 9 und 10 unterscheidet sich von derjenigen nach Fig. 7 und 8 dadurch, daß das Ende 232a des inneren Rahmendrahts 232 weiter nach unten gezogen ist und den U-Draht 239 unterschlingt. Dadurch ist eine Fangschleife 244 gebildet, in welche der Querschenkel 236a des Langbügels 236 eintritt, wenn er das rechte Schiebeführungselement 235 und damit den Eingang der Schiebeführung verläßt. Diese Verhältnisse sind im einzelnen in Fig. 25 dargestellt. Dort erkennt man wieder die Schiebeführungselemente 235, welche zusammen eine Schiebeführung 235-235 ergeben. An dem rechten Eingang der Schiebeführung 235-235 ist die Fangschleife 244 schematisch dargestellt. Der Langbügel 236 ist nach Ausziehen aus der Schiebeführung 235-235 durch die Fangschleife 244 gefangen. Eine vollständige Entnahme des abgeschlossenen Langbügelschlosses 237 ist zunächst nicht möglich. Sie kann erst dadurch ermöglicht werden, daß der Schloßkörper 237a nach Einführen eines Schlüssels 237b von dem Langbügel 236 abgenommen wird. Dann kann der Langbügel 236 um eine Achse A-A gedreht werden, bis die Längsachse des Langbügels etwa senkrecht zur Einschubrichtung 238 steht. Dann kann der Langbügel abgezogen werden. Das Einsetzen des Langbügels erfolgt in umgekehrter Reihenfolge. Der Einschubbegrenzungsanschlag kann von dem Mittelabschnitt 244a der Fangschleife 244 gebildet sein, während der Auszugbegrenzungsanschlag in Form eines federnden Hakens 244c an der Fangschleife befestigt sein kann.

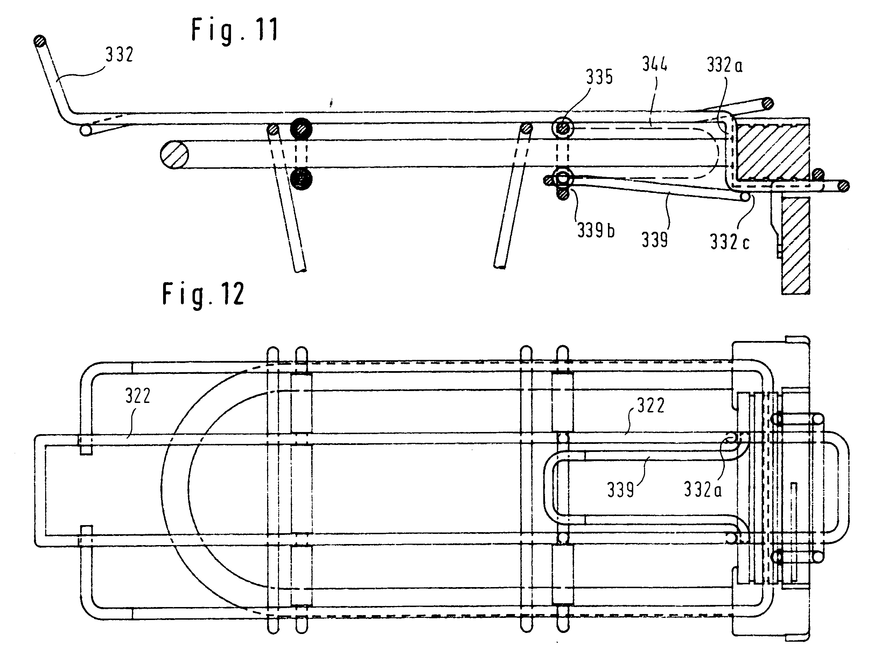

Die Ausführungsformen nach Fig. 11 und 12 unterscheiden sich von derjenigen nach den Fig. 9, 10 und 25 durch eine abweichende Gestaltung der Fangschleife 344. Die Fangschleife 344 grenzt auch hier wieder an das rechte Schiebeführungselement 335 an und ist gebildet durch den inneren Rahmendraht 332, dessen abwärts gekröpften Endabschnitt 332a und einen U-Draht 339, der an dem Rahmendraht 332a bei 332c angeschweißt ist und auf dem Schiebeführungselement 335 bei 339b aufliegt. Die Sicherungs-, Einführungs- und Entnahmeverhältnisse sind die gleichen wie im Zusammenhang mit Fig. 9 und 10 beschrieben.

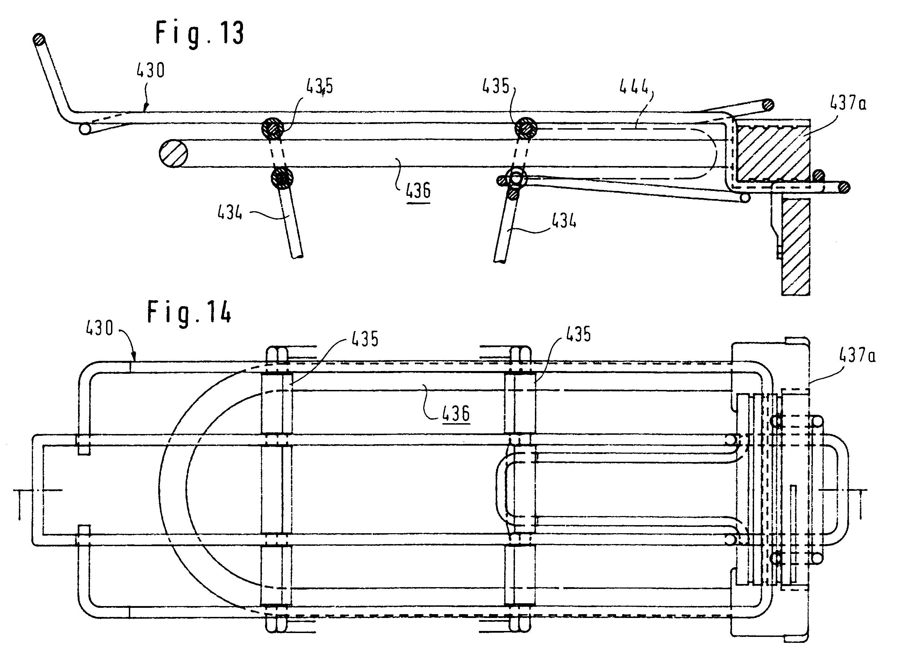

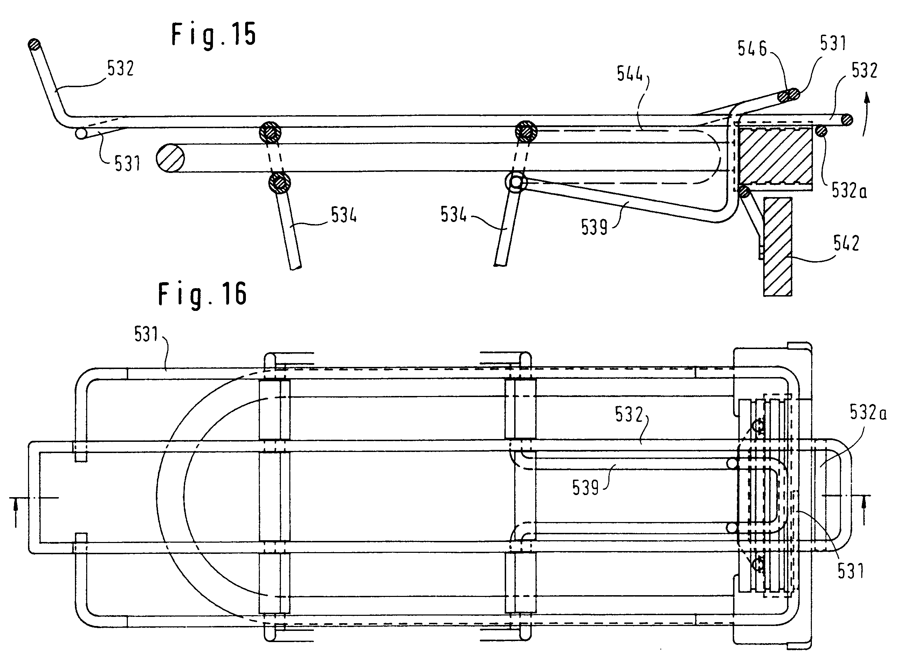

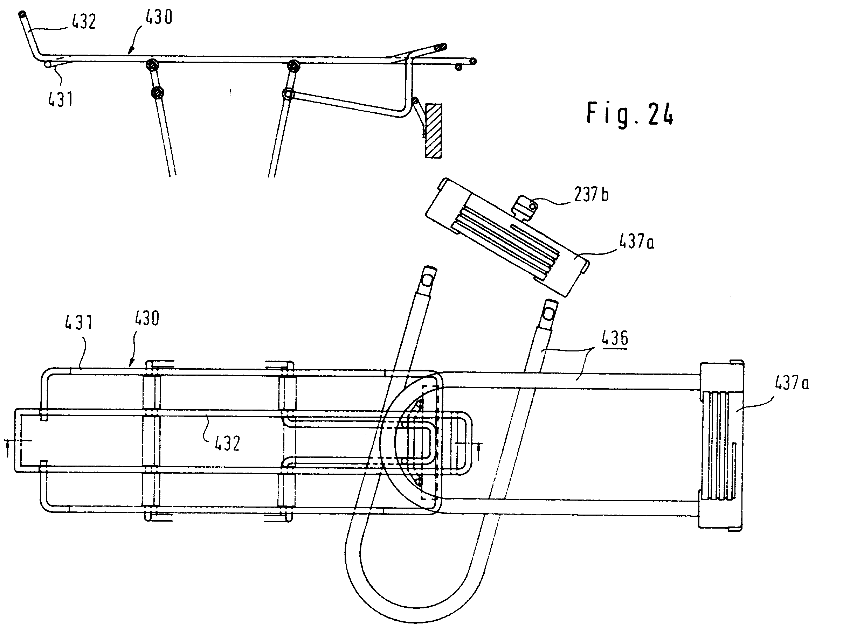

Die Ausführungsform nach den Fig. 13 und 14 entspricht genau derjenigen nach den Fig. 11 und 12 mit dem Unterschied, daß die Schiebeführungselemente 435 nunmehr an den Gepäckträgerstreben 434 angebracht sind. Im übrigen entspricht das Bild der Fig. 24 der Ausführungsform nach den Fig. 15 und 16. Es läßt erkennen, wie der Langbügel 436 nach Abnehmen des Schloßkörpers 437a aus der Fangschleife gezogen werden kann, die in Fig. 25 schematisch angedeutet ist. Die Fangschleife ist auch in Fig. 13 schematisch angedeutet und mit 444 bezeichnet.

In Fig. 15 und 16 ist der Auszugbegrenzungsanschlag auf dem Ende des Rahmendrahts 532a an der Unterseite des nach oben auslenkbaren inneren Rahmendrahts 532 angebracht. Die Fangschleife 544 ist dadurch gebildet, daß der U-Draht 539 einerseits an der Gepäckträgerstrebe 534 befestigt ist und andererseits bei 546 an dem äußeren Rahmendraht 531. Der Rückscheinwerfer 542 ist hier an dem U-Draht 539 angebracht. Das Anbringen und Entnehmen des Schlosses geschieht genauso wie unter Bezugnahme auf Fig. 24 und 25 beschrieben.

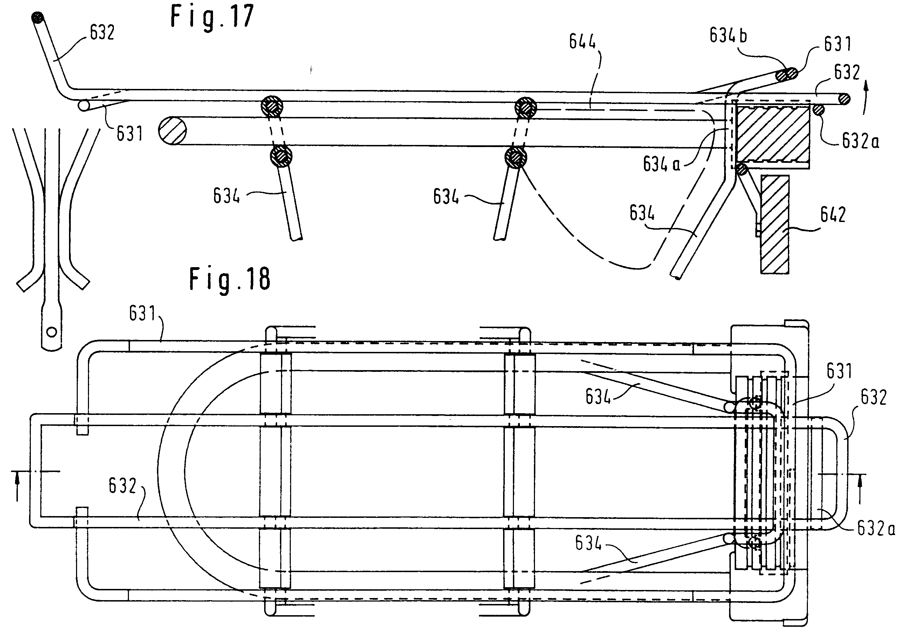

Die Ausführungsform nach Fig. 17 und 18 unterscheidet sich von früheren Ausführungsformen dadurch, daß die Fangschleife 644 durch die beiden Gepäckträgerstreben 634 und den inneren Rahmendraht 632 gebildet ist, welcher die vorderste Gepäckträgerstrebe 634 durchdringt. Dabei ist der Einschubbegrenzungsanschlag von einem oberen Abschnitt 634a der vordersten Gepäckträgerstrebe gebildet, der bei 634b an dem äußeren Rahmendraht 631 angeschweißt ist. Der Rückscheinwerfer 642 ist an der vordersten Gepäckträgerstrebe 634 befestigt. Der Auszugbegrenzungsanschlag ist am inneren Rahmendraht 632 befestigt und mit 632a bezeichnet. Das Ausrücken des Auszugbegrenzungsanschlags erfolgt durch Ausbiegen des inneren Rahmendrahts 632 nach oben.

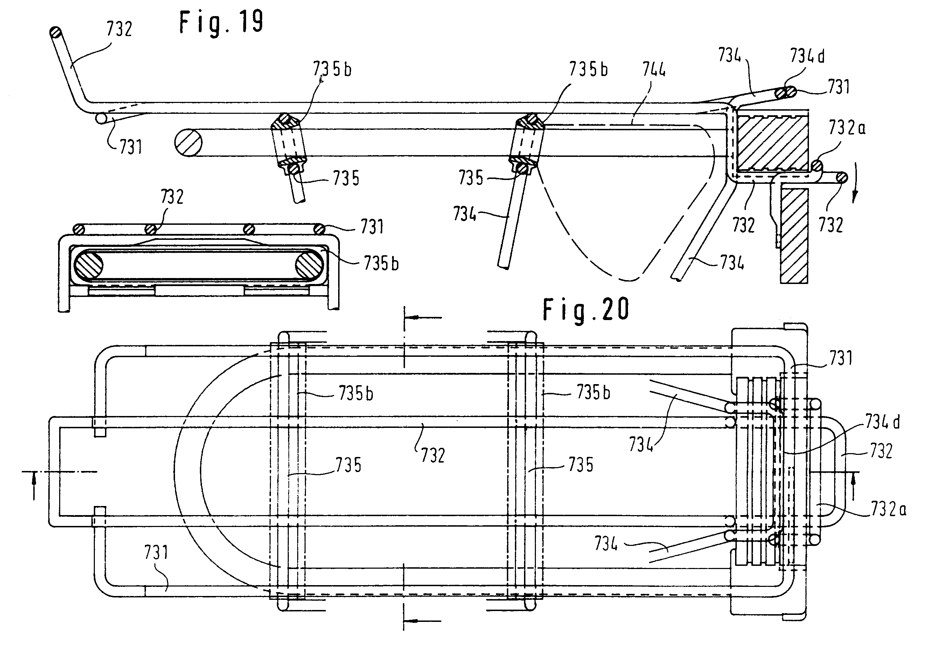

Die Ausführungsform nach den Fig. 19 und 20 bringt insofern eine Besonderheit, als die Schiebeführungselemente 735 von Kunststoffrahmen 735b ausgekleidet sind, welche auf die Schiebeführungselemente aufgeklipst sind. Hierzu wird auf die Schnittdarstellung auf dem gleichen Figurenblatt verwiesen. Die Fangschleife 744 ist durch die zwei rückwärtigen Strebenpaare 734 gebildet, wobei das hinterste Strebenpaar 734 bei 734d an dem äußeren Rahmendraht 731 angeschweißt ist und der innere Rahmendraht 732 nach unten und hinten abgekröpft ist und den Auszugbegrenzungsanschlag 741a trägt. Die Ausrückung des Auszugbegrenzungsanschlags 741a erfolgt durch Abwärtsbewegung des rückwärtigen Endes des inneren Rahmendrahts 732.

Die Kunststoffrahmen 735b können austauschbar sein und zur Anpassung vorgegebener Schiebeführungselemente an unterschiedliche Langbügelformate in unterschiedlicher Form bereitgestellt werden.

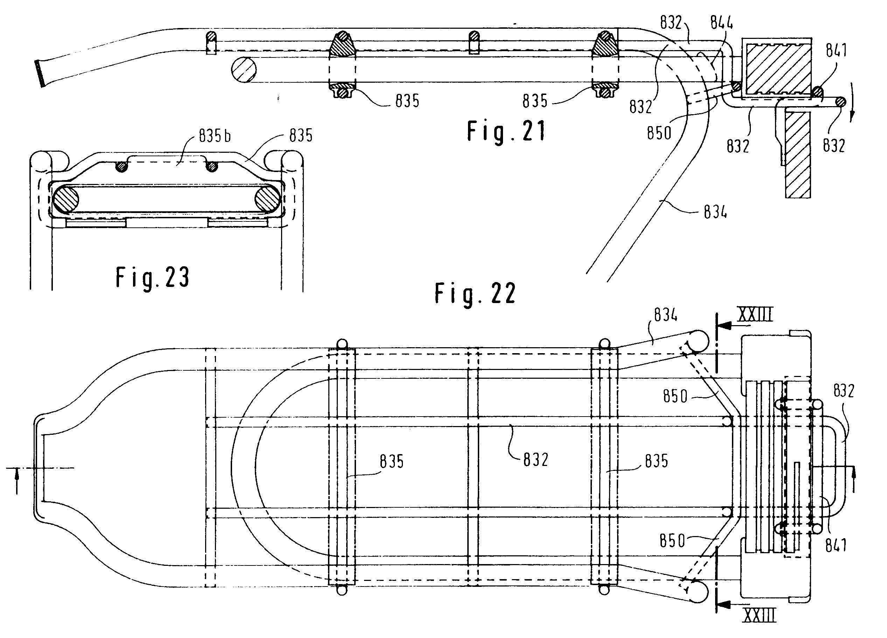

Die Ausführungsform nach Fig. 21 und 22 entspricht bezüglich der Auskleidung der Schiebeführungselemente 835 der Ausführungsform nach den Fig. 19 und 20. Hierzu wird zusätzlich auf die Fig. 23 verwiesen, welche die Auskleidung der Elemente 835b an den Schiebeführungselemente 835 erkennen läßt. Die Fangschleife 844 ist gebildet durch den inneren Rahmendraht 832, der wiederum den Auszugbegrenzungsanschlag 841a trägt und nach unten zur Freigabe des Auszugsbegrenzungsanschlags auslenkbar ist, und ist ferner gebildet durch einen Trapezbügel 850, welcher an dem inneren Rahmendraht 832 anliegt und mit den rückwärtigen Streben 834 an seinen Enden verschweißt ist. Auch hier erfolgt das Einsetzen und Entnehmen des Langbügelschlosses nach dem Schema der Fig. 24 und 25.

Der Gepäckträger kann einschließlich der Halterungsmittel für das Langbügelschloß, also insbesondere einschließlich der Schiebeführung, aus Kunststoff gespritzt sein oder als Zink-Druck-Guß- oder Aluminium-Druck-Guß-Teil hergestellt sein. Dabei wird man den Gepäckträger vorzugsweise einstuckig herstellen, notfalls aber aus einigen wenigen Formstücken zusammensetzen.

## Patentansprüche

1. Gepäckträger für ein Zweirad umfassend:
- einen am Zweirad anbringbaren Tragrahmen (2a, 2d, 2e),
- an dem Tragrahmen (2) angeordnete Halterungsmittel (12, 2b), um ein Langbügelschloß (1), welches einen U-förmigen Langbügel (6) mit einem Steg (6b) und zwei Schenkeln (6a) und einen mit stegfernen Enden der Schenkel (6a) kuppelbaren bzw. gekuppelten Schloßkörper (8) aufweist, in Parallelstellung zur Tragebene des Tragrahmens (2a, 2d, 2e), vorzugsweise mit annähernder Koinzidenz der Längsachse des Langbügels (6) mit einer Längsmittelebene des Zweiradgepäckträgers (2), an dem Tragrahmen (2a, 2d, 2e) zu halten,
wobei die Halterungsmittel (12, 2b) eine zur Längserstreckung des Tragrahmens (2a, 2d, 2e) im wesentlichen parallele Schiebeführung mit einem Eingang bilden, durch welche der Langbügel (6) des Langbügelschlosses (1) mit seinem Steg (6b) voraus vom hinteren Ende des Tragrahmens her in die Schiebeführung einschiebbar ist, derart daß in der Halterungsstellung der Schloßkörper (8) im Bereich des rückwärtigen Endes (2a) des Tragrahmens (2a, 2d, 2e) und der Steg (6b) im vorderen Bereich des Tragrahmens (2a, 2d, 2e) liegt und das Langbügelschloß (1) vom Tragrahmen betriebsmäßig vollständig trennbar ist,
- Sicherungsmittel (14, 18), um das Langbügelschloß in der Schiebefuhrung (12, 2b) gegen unbeabsichtigte Verschiebung zu sichern,
**dadurch gekennzeichnet,**
daß die Sicherungsmittel einen quer zur Einschubrichtung des Langbügelschlosses ausrückbaren Auszugbegrenzungsanschlag (18) umfassen.

2. Gepäckträger nach Anspruch 1,
dadurch gekennzeichnet,
daß die Sicherungsmittel (14, 18) ferner einen Einschubbegrenzungsanschlag (14) zur Begrenzung der Einschubbewegung des Langbügels (6) umfassen.

3. Gepäckträger nach Anspruch 1 oder 2,
dadurch gekennzeichnet,
daß der Auszugbegrenzungsanschalg (18) gegen Federkraft aus der Auszugbegrenzungsstellung auslenkbar ist.

4. Gepäckträger nach einem der vorhergehenden Ansprüche
dadurch gekennzeichnet,
daß der Langbügel (6) in der Halterungsstellung in kurzem Abstand unterhalb der Tragebene des Tragrahmens (2a, 2d, 2e) liegt.

5. Gepäckträger nach einem der Ansprüche 1 - 4,
dadurch gekennzeichnet,
daß der Langbügel (6) unmittelbar an der Unterseite des Tragrahmens (2a,2d,2e) angeordnet ist.

6. Gepäckträger nach einem der Ansprüche 1 - 5,
dadurch gekennzeichnet,
daß der Langbügel (6) zwischen der Unterseite des Tragrahmens (2a,2d,2e) und einem unterhalb des Tragrahmens (2a,2d,2e) angeordneten Hinterrad-Schutzblech (20) angeordnet ist.

7. Gepäckträger nach einem der Ansprüche 1 - 6,
dadurch gekennzeichnet,
daß die Schiebeführung (12,2b) zwei in Längsrichtung des Tragrahmens (2a,2d,2e) beabstandete Schiebeführungselemente (12,2b) aufweist.

8. Gepäckträger nach einem der Ansprüche 1 - 7,
dadurch gekennzeichnet,
daß der Auszugbegrenzungsanschlag (18) mit einer Anschlagfläche des Schloßkörpers (8) zusammenwirkt.

9. Gepäckträger nach einem der Ansprüche 1 - 8,
dadurch gekennzeichnet,
daß der Auszugbegrenzungsanschlag mit einem Teil des Langbügelschlosses (1) bei dessen Einführung in die Schiebeführung (12,2b) zusammentritt und dadurch zwangsläufig auslenkbar ist.

10. Gepäckträger nach Anspruch 9,
dadurch gekennzeichnet,
daß das Langbügelschloß (1) mit dem Auszugbegrenzungsanschlag (18) über eine Auslenkschräge (20) zusammenwirkt.

11. Gepäckträger nach einem der Ansprüche 1 - 10,
dadurch gekennzeichnet,
daß an dem Auszugsbegrenzungsanschlag (18) ein Löseelement (20) zum Ausrücken des Auszugbegrenzungsanschlags (18) aus seiner Wirkstellung vorgesehen ist.

12. Gepäckträger nach einem der Ansprüche 1 - 11,
dadurch gekennzeichnet,
daß der Schloßkörper (8) in der eingeschobenen Stellung mit seiner dem Langbügelsteg (6b) zugekehrten Endfläche einem rückwärtigen Querschenkel (2a) des Tragrahmens (2a,2d,2e) benachbart ist.

13. Gepäckträger nach einem der Ansprüche 1 - 12,
dadurch gekennzeichnet,
daß die Schiebeführung (12,2b) mindestens ein die beiden Schenkel (6a) des Langbügels (6) gemeinsam umgreifendes Durchsteckkanalelement (12) aufweist.

14. Gepäckträger nach Anspruch 13,
dadurch gekennzeichnet,
daß der Einschubbegrenzungsanschlag (14) von einer Endfläche (14) des Durchsteckkanalelements (12) gebildet ist.

15. Gepäckträger nach Anspruch 13 oder 14,
dadurch gekennzeichnet,
daß der Auszugbegrenzungsanschlag (18) einstückig mit dem Durchsteckkanalelement (12) hergestellt ist.

16. Gepäckträger nach Anspruch 15,
dadurch gekennzeichnet,
daß der Auszugbegrenzungsanschlag (18) von einem Blattfederelement (16) getragen ist.

17. Gepäckträger nach einem der Ansprüche 1 - 16,
dadurch gekennzeichnet,
daß zwei Schiebeführungselemente (12,2b) der Längsschiebeführung (12,2b) derart außer Flucht sind, daß ein Einschieben des Langbügels (6) nur unter elastischer Deformation mindestens eines dieser Längsschiebeelemente (12,2b) möglich ist.

18. Gepäckträger nach einem der Ansprüche 1 - 17,
dadurch gekennzeichnet,
daß mindestens ein Schiebeführungselement (135) an der Unterseite von Längsstäben (131,132) des Tragrahmens (130) befestigt ist.

19. Gepäckträger nach einem der Ansprüche 1 - 17,
dadurch gekennzeichnet,
daß mindestens ein Schiebeführungselement (435) der Schiebeführung an Stützstäben (434) befestigt ist, welche von dem Tragrahmen (430) zu einer Abstützung im Bereich der Hinterradachse verlaufen.

20. Gepäckträger nach einem der Ansprüche 1 - 19,
dadurch gekennzeichnet,
daß ein Schiebeführungselement (135) der Schiebeführung wenigstens z. T. aus Drahtmaterial gebildet ist.

21. Gepäckträger nach Anspruch 20,
dadurch gekennzeichnet,
daß das Drahtmaterial mindestens im Bereich der Anlage der Schenkel des Langbügels (136) mit Elastomermaterial (135a) beschichtet ist.

22. Gepäckträger nach Anspruch 21,
dadurch gekennzeichnet,
daß das Drahtmaterial von einem Elastomerschlauch (135a) eingeschlossen ist.

23. Gepäckträger nach Anspruch 21,
dadurch gekennzeichnet,
daß in ein ringförmig geschlossenes Schiebeführungselement (735) ein Kontaktrahmen (735b) aus Elastomermaterial eingesetzt, insbesondere eingeschnappt, ist.

24. Gepäckträger nach einem der Ansprüche 1 - 23,
dadurch gekennzeichnet,
daß das Langbügelschloß (237) an dem Gepäckträger (230) gegen unbefugtes Entnehmen gesperrt ist.

25. Gepäckträger nach einem der Ansprüche 1 - 24,
dadurch gekennzeichnet,
daß im Eingangsbereich der Schiebeführung (235) eine den vom Langbügel (236) und vom Schloßkörper (237a) begrenzten Durchgang durchsetzende Fangvorrichtung (244) vorgesehen ist, welche den Rückzug des Langbügels (236) aus der Schiebeführung (235) bis in eine Drehstellung gestattet, in welcher der Langbügel (236) aus der Fluchtlage zur Schiebeführung (235) herausdrehbar ist derart, daß die Schenkel des Langbügels (236) nach Abnehmen des Schloßkörpers (237a) von der Fangvorrichtung (244) abgezogen werden können.

26. Gepäckträger nach Anspruch 25,
dadurch gekennzeichnet,
daß die Fangvorrichtung (244) von einer vor dem Eingang der Schiebeführung (235) angebrachten Fangschleife (244) gebildet ist, welche ein Aushaken des mit dem Schloßkörper (237a) vereinigten Langbügels (236) verhindert und zu der Schiebeführung (235) hin derart offen ist, daß der Langbügel (236) mit seinem Steg (236a) voraus von der Fangschleife (244) aus in die Schiebeführung (235) eingeschoben werden kann.

27. Gepäckträger nach einem der Ansprüche 25 und 26,
dadurch gekennzeichnet,
daß die Fangvorrichtung (244) von Konstruktionsteilen des Tragrahmens (230) und/oder von Trägerstreben (634) des Trägerrahmens gebildet ist.

28. Gepäckträger nach einem der Ansprüche 25 - 27,
dadurch gekennzeichnet,
daß ein Teil der Fangvorrichtung (244) den Einschubbegrenzungsanschlag (244a) bildet, welcher das Einschieben des Langbügels (236) in die Schiebeführung (235) begrenzt.

29. Gepäckträger nach einem der Ansprüche 25 - 28, Gepäckträger nach einem der Ansprüche 25 - 28
dadurch gekennzeichnet,
daß ein auslenkbarer Teil (244c) der Fangvorrichtung (244) den Auszugbegrenzungsanschlag bildet, welcher den Auszug des Langbügels (236) aus der Schiebeführung (235) in seiner Ruhestellung verhindert und nach Auslenken aus der Ruhestellung gestattet.

30. Gepäckträger nach einem der Ansprüche 25 - 29,
dadurch gekennzeichnet,
daß an der Fangvorrichtung (244) eine Rückleuchte (242) des Zweirads angebracht ist.

31. Transportanordnung eines Langbügelschlosses (237) an einem Zweirad, insbesondere an dem Gepäckträger (230) eines Zweirads nach einem der Ansprüche 1 - 26, wobei an dem Zweirad, insbesondere dem Gepäckträger (230), eine Schiebeführung (235) mit einem Eingang vorgesehen ist, durch welchen der Langbügel (236) des Langbügelschlosses (237) mit seinem Steg (236a) voraus einführbar ist, wobei Sicherungsmittel (232a,241a) vorgesehen sind, um das Langbügelschloß (237) in der Schiebeführung (235) gegen unbeabsichtigte Verschiebung zu sichern,
dadurch gekennzeichnet,
daß im Eingangsbereich der Schiebeführung (235) eine den vom Langbügel (236) und vom Schloßkörper (237a) begrenzten Durchgang durchsetzende Fangvorrichtung (244) vorgesehen ist, welche den Rückzug des Langbügels (236) aus der Schiebeführung (235) bis in eine Drehstellung gestattet, in welcher der Langbügel (236) aus der Fluchtlage zur Schiebeführung (235) herausdrehbar ist derart, daß die Schenkel des Langbügels (236) nach Abnehmen des Schloßkörpers (237a) von der Fangvorrichtung (244) abgezogen werden können.

32. Transportanordnung nach Anspruch 31,
dadurch gekennzeichnet,
daß die Fangvorrichtung (244) von einer vor dem Eingang der Schiebeführung (235) angebrachten Fangschleife (244) gebildet ist, welche ein Aushaken des mit dem Schloßkörper (237a) vereinigten Langbügels (236) verhindert und zu der Schiebeführung (235) hin derart offen ist, daß der Langbügel (236) mit seinem Steg (236a) voraus von der Fangschleife (244) aus in die Schiebefuhrung (235) eingeschoben werden kann.

33. Transportanordnung nach einem der Ansprüche 31 und 32,
dadurch gekennzeichnet,
daß die Fangvorrichtung (244) von Konstruktionsteilen des Tragrahmens (230) und/oder von Trägerstreben (634) des Trägerrahmens gebildet ist.

34. Transportanordnung nach einem der Ansprüche 31 - 33,
dadurch gekennzeichnet,
daß ein Teil der Fangvorrichtung (244) einen Einschubbegrenzungsanschlag (244a) bildet, welcher das Einschieben des Langbügels (236) in die Schiebeführung (235) begrenzt.

35. Transportanordnung nach einem der Ansprüche 31 - 34,
dadurch gekennzeichnet,
daß ein auslenkbarer Teil (244c) der Fangvorrichtung (244) einen Auszugbegrenzungsanschlag bildet, welcher den Auszug des Langbügels (236) aus der Schiebeführung (235) in seiner Ruhestellung verhindert und nach Auslenken aus der Ruhestellung gestattet.

36. Transportanordnung nach einem der Ansprüche 31 - 35,
dadurch gekennzeichnet,
daß an der Fangvorrichtung (244) eine Rückleuchte (242) des Zweirads angebracht ist.

37. Transportanordnung eines Langbügelschlosses (237) an einem Zweirad, insbesondere an dem Gepäckträger (230) eines Zweirads, nach einem der Ansprüche 2 - 26, wobei an dem Zweirad, insbesondere dem Gepäckträger (230) eine Schiebeführung (235) mit einem Eingang vorgesehen ist, durch welchen der Langbügel (236) des Langbügelschlosses (237) mit seinem Steg (236a) voraus einführbar ist, wobei Sicherungsmittel (232a,241a) vorgesehen sind, um das Langbügelschloß (237) in der Schiebeführung (235) gegen unbeabsichtigte Verschiebung zu sichern,
dadurch gekennzeichnet,
daß der Langbügel (236) des Langbügelschlosses (237) in eine dessen beide Schenkel aufnehmende Schiebeführung (235) einsteckbar ist und daß ein relativ zur Einsteckrichtung elastisch ausrückbarer Auszugbegrenzungsanschlag (241a) vorgesehen ist.

## Claims

1. A luggage carrier for a bicycle and comprising:
- a carrier frame (2a, 2d, 2e) adapted to be mounted on the bicycle,
- holding means (12, 2b) disposed on the carrier frame (2) in order to hold a long shackle lock (1) which comprises a U-shaped long shackle (6) with a web (6b) and two arms (6a) and with a lock body (8) coupled or adapted to be coupled to ends of the arms (6a) which are remote from the web on the carrier frame (2a, 2d, 2e), in a position parallel with the carrying plane of the carrier frame (2a, 2d, 2e) preferably in approximate coincidence of the longitudinal axis of the long shackle (6) with a longitudinal central plane of the bicycle luggage carrier (2),
whereby the holding means (12, 2b) form a sliding guide substantially parallel with the longitudinal extension of the carrier frame (2a, 2d, 2e) with an intake through which the long shackle (6) of the long shackle lock (1) can be inserted from the rear end of the carrier frame into the sliding guide with its web (6b) leading, in such a way that in the holding position the lock body (8) is situated in the region of the rear end (2a) of the carrier frame (2a, 2d, 2e) while the web (6b) is in the front portion of the carrier frame (2a, 2d, 2e) and the long shackle lock (1) can in operation be completely separated from the carrier frame,
- securing means (14, 18) to secure the long shackle lock in the sliding guide (12, 2b) to prevent unintended displacement,
- characterised in that the securing means comprise a pull-out limiting stop (18) which can be disengaged crosswise to the direction in which the long shackle lock is pushed in.

2. A luggage carrier according to claim 1, characterised in that the securing means (14, 18) further comprise a push-in limiting stop (14) to restrict the push-in movement of the long shackle (6).

3. A luggage carrier according to claim 1 or 2, characterised in that the pull-out limiting stop (18) can be deflected from the pull-out limiting position against spring force.

4. A luggage carrier according to one of the preceding claims, characterised in that in the holding position the long shackle (6) is situated at a short distance below the carrier plane of the carrier frame (2a, 2d, 2e).

5. A luggage carrier according to one of claims 1 to 4, characterised in that the long shackle (6) is disposed immediately on the underside of the carrier frame (2a, 2d, 2e).

6. A luggage carrier according to one of claims 1 to 5, characterised in that the long shackle (6) is disposed between the under side of the carrier frame (2a, 2d, 2e) and a rear wheel protecting plate (20) disposed under the carrier frame (2a, 2d, 2e).

7. A luggage carrier according to one of claims 1 to 6, characterised in that the sliding guide (12, 2b) comprises two sliding guide elements (12, 2b) spaced apart in the longitudinal direction of the carrier frame (2a, 2d, 2e).

8. A luggage carrier according to one of claims 1 to 7, characterised in that the pull-out limiting stop (18) co-operates with an abutment surface of the lock body (8).

9. A luggage carrier according to one of claims 1 to 8, characterised in that the pull-out limiting stop encounters a part of the long shackle lock (1) as this is inserted into the sliding guide (12, 2b) and can consequently be positively deflected.

10. A luggage carrier according to claim 9, characterised in that the long shackle lock (1) co-operates with the pull-out limiting stop (18) via an inclined deflector (20).

11. A luggage carrier according to one of claims 1 to 10, characterised in that a slackening element (20) for disengagement of the pull-out limiting stop (18) from its operative position is provided on the pull-out limiting stop (18).

12. A luggage carrier according to one of claims 1 to 11, characterised in that in the pushed-in position the end surface of the lock body (8) which is towards the long shackle web (6b) is adjacent a rear transverse member (2a) of the carrier frame (2a, 2d, 2e).

13. A luggage carrier according to one of claims 1 to 12, characterised in that the sliding guide (12, 2b) comprises at least one push-through channel element (12) engaging jointly over the two arms (6a) of the long shackle (6).

14. A luggage carrier according to claim 13, characterised in that the push-in limiting stop (14) consists of an end surface (14) of the push-through channel element (12).

15. A luggage carrier according to one of claims 13 or 14, characterised in that the pull-out limiting stop (18) is produced in one piece with the push-through channel element (12).

16. A luggage carrier according to claim 15, characterised in that the pull-out limiting stop (18) is carried by a leaf spring element (16).

17. A luggage carrier according to one of claims 1 to 16, characterised in that two sliding guide elements (12, 2b) of the longitudinal sliding guide (12, 2b) are so offset that pushing-in of the long shackle (6) is possible only with an elastic deformation of at least one of these longitudinal sliding elements (12, 2b).

18. A luggage carrier according to one of claims 1 to 17, characterised in that at least one sliding guide element (135) is fixed on the underside of longitudinal bars (131, 132) of the carrier frame (130).

19. A luggage carrier according to one of claims 1 to 17, characterised in that at least one sliding guide element (435) of the sliding guide is fixed on supporting bars (434) which extend from the carrier frame (430) to a support in the region of the rear wheel axle.

20. A luggage carrier according to one of claims 1 to 19, characterised in that a sliding guide element (135) of the sliding guide is at least partially formed from wire material.

21. A luggage carrier according to claim 20, characterised in that the wire material is coated with an elastomeric material (135a) at least in the place where the arms of the long shackle (136) are in bearing contact.

22. A luggage carrier according to claim 21, characterised in that the wire material is enclosed in an elastomeric sleeve (135a).

23. A luggage carrier according to claim 21, characterised in that a contact frame (735b) of elastomeric material is inserted, particularly snapped into position in an annularly closed sliding guide element (735).

24. A luggage carrier according to one of claims 1 to 23, characterised in that the long shackle lock (237) is locked on the luggage carrier (230) against unauthorised removal.

25. A luggage carrier according to one of claims 1 to 24, characterised in that in the intake portion of the sliding guide (235) there is a catching device (244) which passes through an access limited by the long shackle (236) and lock body 237a) and which allows the long shackle (236) to be pulled out of the sliding guide (235) and into a rotating position in which the long shackle (236) can be rotated out of its position of alignment with the sliding guide (235) so that the arms of the long shackle (236) can be withdrawn from the catch device (244) after the lock body (237a) has been removed.

26. A luggage carrier according to claim 25, characterised in that the catch device (244) consists of a catch loop (244) mounted in front of the intake to the sliding guide (235) and which prevents disengagement of the long shackle (236) which is combined with the lock body (237a) and which is open towards the sliding guide (235) in such a way that, with its web (236a) leading, the long shackle (236) can be removed from the catch loop (244) and pushed into the sliding guide (235).

27. A luggage carrier according to one of claims 25 and 26, characterised in that the catch device (244) consists of structural parts of the carrier frame (230) and/or carrier struts (634) of the carrier frame).

28. A luggage carrier according to one of claims 25 to 27, characterised in that a part of the catch device (244) constitutes the push-in limiting stop (244a) which limits insertion of the long shackle (236) into the sliding guide (235).

29. A luggage carrier according to one of claims 25 to 28, characterised in that a deflectable part (244c) of the catch device (244) constitutes the pull-out limiting stop which prevents the long shackle (236) being pulled out of the sliding guide (234) into its inoperative position and permits it after deflection from the inoperative position.

30. A luggage carrier according to one of claims 25 to 29, characterised in that a rear light (242) is mounted on the catch device (244) of the bicycle.

31. An arrangement for transporting a long shackle lock (237) on a bicycle, particularly on the luggage carrier (230) of a bicycle according to one of claims 1 to 26, whereby on the bicycle, particularly on the luggage carrier (230), there is a sliding guide (235) with an inlet through which the long shackle (236) of the long shackle lock (237) can be inserted with its web (236a) leading, securing means (232a, 241a) being provided to secure the long shackle lock (237) in the sliding guide (235) to prevent unintended displacement, characterised in that in the inlet portion of the sliding guide (236) there is, passing through the access limited by the long shackle (236) and the lock body (237a), a catch device (244) which allows the withdrawal of the long shackle (236) out of the sliding guide (235) until it reaches a rotating position in which the long shackle (236) can be rotated out of its position of alignment with the sliding guide (235) in such a way that the arms of the long shackle (236) can be removed from the catch device (244) after the lock body (237a) has been detached.

32. A transport arrangement according to claim 31, characterised in that the catch device (244) is constituted by a catch loop (244) mounted in front of the entrance to the sliding guide (235) and which prevents disengagement of the long shackle (236) combined with the lock body (237a) and which is so open towards the sliding guide (235) that, with its web (236a) leading, the long shackle (236) can be removed from the catch loop (244) and pushed into the sliding guide (235).

33. A transport arrangement according to claims 31 and 32, characterised in that the catch device (244) is formed by structural parts of the carrier frame (23) and/or carrier struts (634) of the carrier frame.

34. A transport arrangement according to one of claims 31 to 33, characterised in that a part of the catch device (244) forms a push-in limiting stop (244a) which limits the extent to which the long shackle (236) can be pushed into the sliding guide (235).

35. A transport arrangement according to one of claims 31 to 34, characterised in that a deflectable part (244c) of the catch device (244) forms a pull-out limiting stop which prevents withdrawal of the long shackle (236) from the sliding guide (235) in its inoperative position and permits it after deflection from the inoperative position.

36. A transport arrangement according to one of claims 31 to 325, characterised in that a rear light (242) for the bicycle is mounted on the catch device (244).

37. A transport arrangement of a long shackle lock (237) on a bicycle, particularly on the luggage carrier (230) of a bicycle, according to one of claims 2 to 26, whereby a sliding guide (235) is mounted on the bicycle, particularly on the luggage carrier (230) and has an inlet through which the long shackle (236) of the long shackle lock (237) can be inserted with its web (236a) leading, securing means (232a, 241a) being provided to secure the long shackle lock (237) in the sliding guide (235) against unintentional displacement, characterised in that the long shackle (236) of the long shackle lock (237) can be inserted into a sliding guide (235) which accommodates its two arms and in that a pull-out limiting stop (241a) is provided which can be elastically deflected in relation to the push-in direction.

## Revendications

1. Porte-bagages pour bicyclette comportant :
- un cadre de support (2a, 2d, 2e) à monter sur la bicyclette,
- des moyens de fixation (12, 2b), placés sur le cadre de support (2), pour maintenir une serrure à étrier allongé (1), qui présente un étrier allongé (6) en forme de U avec un dos (6b) et deux branches (6a) ainsi qu'un corps de serrure (8), pouvant être accouplé ou étant accouplé avec les extrémités, éloignées du dos, des branches (6a), sur le cadre de support (2a, 2d, 2e), dans une position parallèle au plan de support du cadre de support (2a, 2e, 2e), de préférence de manière que l'axe longitudinal de l'étrier allongé (6) coïncide approximativement avec un plan médian longitudinal du porte-bagages (2) de la bicyclette,
les moyens de fixation (12, 2b) formant un guidage coulissant, sensiblement parallèle à l'extension longitudinale du cadre de support (2a, 2d, 2e), avec une entrée par laquelle l'étrier allongé (6) de la serrure (1) peut être introduite avec son dos (6b) vers l'avant, à partir de l'extrémité arrière du cadre de support, dans le guidage coulissant, de manière qu'en position de fixation le corps de serrure (8) se trouve dans la zone de l'extrémité (2a) arrière du cadre de support (2a, 2d, 2e) et le dos (6b) dans la zone avant du cadre de support (2a, 2d, 2e), et de manière que la serrure (1) à étrier allongé puisse être totalement séparée, pour son fonctionnement, du cadre de support,
des moyens de blocage (14, 18) afin de bloquer la serrure à étrier allongé dans le guidage coulissant (12, 2b) contre un coulissement involontaire,
caractérisé en ce que les moyens de blocage comportent une butée de limitation d'extraction (18), pouvant être dégagée transversalement à la direction d'introduction de la serrure à étrier allongé.

2. Porte-bagages selon la revendication 1, caractérisé en ce que les moyens de blocage (14, 18) comportent en outre une butée de limitation d'introduction (14) destinée à limiter le déplacement d'introduction de l'étrier allongé (6).

3. Porte-bagages selon les revendications 1 ou 2, caractérisé en ce que la butée de limitation d'extraction (18) peut être déviée de la position de limitation d'extraction, à l'encontre de la force d'un ressort.

4. Porte-bagages selon l'une des revendications précédentes, caractérisé en ce que l'étrier allongé (6) en position de fixation se trouve à une courte distance au-dessous du plan de support du cadre de support (2a, 2d, 2e).

5. Porte-bagages selon l'une des revendications 1 à 4, caractérisé en ce que l'étrier allongé (6) est directement placé sous la face inférieure du cadre de support (2a, 2b, 2e).

6. Porte-bagages selon l'une des revendications 1 à 5, caractérisé en ce que l'étrier allongé (6) est placé entre la face inférieure du cadre de support (2a, 2d, 2e) et un garde-boue de roue arrière (20), situé au-dessous du cadre de support (2a, 2d, 2e).

7. Porte-bagages selon l'une des revendications 1 à 6, caractérisé en ce que le guidage coulissant (12, 2b) comporte deux éléments de guidage coulissant (12, 2b), espacés dans la direction longitudinale du cadre de support (2a, 2d, 2e).

8. Porte-bagages selon l'une des revendications 1 à 7, caractérisé en ce que la butée de limitation d'extraction (18) coopère avec une surface de butée du corps de serrure (8).

9. Porte-bagages selon l'une des revendications 1 à 8, caractérisé en ce que la butée de limitation d'extraction vient heurter une partie de la serrure (1) à étrier allongé lors de son introduction dans le guidage coulissant (12, 2b) et peut ainsi être déviée par force.

10. Porte-bagages selon la revendication 9, caractérisé en ce que la serrure (1) à étrier allongé coopère avec la butée de limitation d'extraction (18) sur une surface oblique de déviation (20).

11. Porte-bagages selon l'une des revendications 1 à 10, caractérisé en ce qu'il est prévu sur la butée de limitation d'extraction (18) un élément de déverrouillage (20) pour dégager la butée de limitation d'extraction (18) de sa position active.

12. Porte-bagages selon l'une des revendications 1 à 11, caractérisé en ce que le corps de serrure (8), en position introduite, est voisin, avec sa surface d'extrémité, tournée vers le dos (6b) de l'étrier allongé, d'une branche transversale (2a) arrière du cadre de support (2a, 2d, 2e).

13. Porte-bagages selon l'une des revendications 1 à 12, caractérisé en ce que le guidage coulissant (12, 2b) comporte au moins un élément à canal de passage (12), entourant conjointement les deux branches (6a) de l'étrier allongé (6).

14. Porte-bagages selon la revendication 13, caractérisé en ce que la butée de limitation d'introduction (14) est formée par une surface d'extrémité (14) de l'élément à canal de passage (12).

15. Porte-bagages selon les revendications 13 ou 14, caractérisé en ce que la butée de limitation d'extraction (18) est réalisée d'une seule pièce avec l'élément à canal de passage (12).

16. Porte-bagages selon la revendication 15, caractérisé en ce que la butée de limitation d'extraction (18) est portée par un élément à ressort à lame (16).

17. Porte-bagages selon l'une des revendications 1 à 16, caractérisé en ce que deux éléments de guidage coulissant (12, 2b) du guidage coulissant longitudinal (12, 2b) sont désalignés de manière qu'une introduction de l'étrier allongé (6) ne soit possible que par déformation élastique d'au moins l'un de ces éléments coulissants longitudinaux (12, 2b).

18. Porte-bagages selon l'une des revendications 1 à 17, caractérisé en ce qu'au moins un élément de guidage coulissant (135) est fixé sur la face inférieure de barreaux longitudinaux (131, 132) du cadre de support (130).

19. Porte-bagages selon l'une des revendications 1 à 17, caractérisé en ce qu'au moins un élément de guidage coulissant (435) du guidage coulissant est fixé sur des barreaux d'appui (434), qui s'étendent à partir du cadre de support (430) vers un appui situé dans la zone de l'axe de la roue arrière.

20. Porte-bagages selon l'une des revendications 1 à 19, caractérisé en ce qu'un élément de guidage coulissant (135) du guidage coulissant est au moins en partie en fil métallique.

21. Porte-bagages selon la revendication 20, caractérisé en ce que le fil métallique est recouvert d'un matériau élastomère (135a), au moins dans la zone de l'application des branches de l'étrier allongé (136).

22. Porte-bagages selon la revendication 21, caractérisé en ce que le fil est enfermé dans un tuyau d'élastomère (135a).

23. Porte-bagages selon la revendication 21, caractérisé en ce que dans un élément de guidage coulissant (735), fermé en anneau, il est placé, en particulier clipsé, un cadre de contact (735b) en matériau élastomère.

24. Porte-bagages selon l'une des revendications 1 à 23, caractérisé en ce que la serrure (237) à étrier allongé est verrouillée sur le porte-bagages (230) de manière à ne pouvoir être enlevée par des personnes non autorisées.

25. Porte-bagages selon l'une des revendications 1 à 24, caractérisé en ce que dans la zone d'entrée du guidage coulissant (235) il est prévu un dispositif de sûreté (244) traversant le passage, défini par l'étrier allongé (236) et le corps de serrure (237a), dispositif qui autorise le retrait de l'étrier allongé (236) hors du guidage coulissant (235) jusque dans une position tournante, dans laquelle l'étrier allongé (236) peut être tourné hors de la position alignée avec le guidage coulissant (235), de manière que les branches de l'étrier allongé (236) puissent être retirées du dispositif de sûreté (244), après enlèvement du corps de serrure (237a).

26. Porte-bagages selon la revendication 25, caractérisé en ce que le dispositif de sûreté (244) est formé par une boucle de sûreté (244), placée devant l'entrée du guidage coulissant (235), qui empêche un décrochage de l'étrier allongé (236), réuni au corps de serrure (237a), et qui est ouverte vers le guidage coulissant (235), de manière que l'étrier allongé (236) puisse être introduit avec son dos (236a) vers l'avant, dans le guidage coulissant (235), à partir de la boucle de sûreté (244).

27. Porte-bagages selon l'une des revendications 25 et 26, caractérisé en ce que le dispositif de sûreté (244) est formé par des éléments de construction du cadre de support (230) et/ou d'entretoises de support (634) du cadre de support.

28. Porte-bagages selon l'une des revendications 25 à 27, caractérisé en ce qu'une partie du dispositif de sûreté (244) forme la butée de limitation d'introduction (244a), qui limite l'introduction de l'étrier allongé (236) dans le guidage coulissant (235).

29. Porte-bagages selon l'une des revendications 25 à 28, caractérisé en ce qu'un élément (244c) déviable du dispositif de sûreté (244) forme la butée de limitation d'extraction, qui empêche d'extraire l'étrier allongé (236) du guidage coulissant (235), dans sa position de repos, et qui l'autorise après déviation à partir de sa position de repos.

30. Porte-bagages selon l'une des revendications 25 à 29, caractérisé en ce qu'un feu arrière (242) de la bicyclette est monté sur le dispositif de sûreté (244).

31. Dispositif de transport d'une serrure à étrier allongé (237) sur une bicyclette, en particulier sur le porte-bagages (230) d'une bicyclette selon l'une des revendications 1 à 26, un guidage coulissant (235) avec une entrée étant prévu sur la bicyclette, en particulier sur le porte-bagages (230), guidage coulissant par lequel l'étrier allongé (236) de la serrure (237) peut être introduit avec son dos (236a) vers l'avant, des moyens de blocage (232a, 241a) étant prévus, afin de bloquer la serrure à étrier allongé (237) dans le guidage coulissant (235), contre un coulissement involontaire,
caractérisé en ce que dans la zone d'entrée du guidage coulissant (235) il est prévu un dispositif de sûreté (244) traversant le passage, défini par l'étrier allongé (236) et le corps de serrure (237a), lequel dispositif de sûreté autorise le retrait de l'étrier allongé (236) hors du guidage coulissant (235) jusque dans une position tournée, dans laquelle l'étrier allongé (236) peut être tourné hors de la position alignée avec le guidage coulissant (235) et que les branches de l'étrier allongé (236) puissent être retirées du dispositif de sûreté (244), après enlèvement du corps de serrure (237a).

32. Dispositif de transport selon la revendication 1, caractérisé en ce que le dispositif de sûreté (244) est formé par une boucle de sûreté (244), placée devant l'entrée du guidage coulissant (235), qui empêche un décrochage de l'étrier allongé (236), réuni au corps de serrure (237a), et qui est ouverte vers le guidage coulissant (235), de manière que l'étrier allongé (236) puisse être introduit avec son dos (236a) vers l'avant, dans le guidage coulissant (235), à partir de la boucle de sûreté (244).

33. Dispositif de transport selon l'une des revendications 31 et 32, caractérisé en ce que le dispositif de sûreté (244) est formé par des éléments de construction du cadre de support (230) et/ou d'entretoises de support (634) du cadre de support.

34. Dispositif de transport selon l'une des revendications 31 à 33, caractérisé en ce qu'une partie du dispositif de sûreté (244) forme une butée de limitation d'introduction (244a), qui limite l'introduction de l'étrier allongé (236) dans le guidage coulissant (235).

35. Dispositif de transport selon l'une des revendications 31 à 34, caractérisé en ce qu'un élément (244c) déviable du dispositif de sûreté (244) forme une butée de limitation d'extraction, qui empêche d'extraire l'étrier allongé (236) du guidage coulissant (235), dans sa position de repos, et qui l'autorise après déviation à partir de sa position de repos.

36. Dispositif de transport selon l'une des revendications 31 à 35, caractérisé en ce qu'un feu arrière (242) de la bicyclette est monté sur le dispositif de sûreté (244).

37. Dispositif de transport d'une serrure à étrier allongé (237) sur une bicyclette, en particulier sur le porte-bagages (230) d'une bicyclette, selon l'une des revendications 2 à 26, un guidage coulissant (235) avec une entrée étant prévu sur la bicyclette, en particulier sur le porte-bagages (230), guidage coulissant par lequel l'étrier allongé (236) de la serrure (237) peut être introduit avec son dos (236a) vers l'avant, des moyens de blocage (232a, 241a) étant prévus, afin de bloquer la serrure à étrier allongé (237) dans le guidage coulissant (235), contre un coulissement involontaire,
caractérisé en ce que l'étrier allongé (236) de la serrure (237) peut être inséré dans un guidage coulissant (235), logeant ses deux branches, et en ce qu'il est prévu une butée de limitation d'extraction (241a), pouvant être dégagée élastiquement par rapport à la direction d'insertion.
